# EUROPEAN PATENT APPLICATION

(11) **EP 4 664 825 A1**
(43) Date of publication of application: **17.12.2025**
(21) Application number: 24769646.1
(22) Date of filing: 16.01.2024
(51) Int. Cl.: H04L 9/40

(54) **APPLICATION BEHAVIOR PROCESSING METHOD, ELECTRONIC DEVICE, AND COMPUTER STORAGE MEDIUM**

(30) Priority: 13.03.2023 CN 202310272396
(71) Applicant: ZTE CORPORATION, Shenzhen, Guangdong 518057 (CN)
(72) Inventor: YANG, Haicheng, Shenzhen, Guangdong 518057 (CN); ZHOU, Jinxing, Shenzhen, Guangdong 518057 (CN)
(74) Representative: Canzler & Bergmeier Patentanwälte Partnerschaft mbB
(86) International application number: PCT/CN2024/072428
(87) International publication number: WO 2024/187950

(57) **Abstract**

The present application provides an application behavior processing method. The method comprises: according to privacy policy information of an application, determining at least one privacy data calling behavior involved in the privacy policy information; according to received permission setting information, determining the permission of the application for each privacy data calling behavior involved in the privacy policy information; if it is monitored that a privacy data calling behavior happens in the application, determining whether the application has the permission to execute the monitored privacy data calling behavior; and if the application does not have the permission to execute the monitored privacy data calling behavior, intercepting the monitored privacy data calling behavior. The present application further provides an electronic device and a computer storage medium.

## Description

### CROSS REFERENCE TO RELATED APPLICATIONS

The present disclosure claims the priority to Chinese Patent Application No. 202310272396.4 filed with the CNIPA on March 13, 2023, the contents of which are incorporated herein by reference in their entirety.

### TECHNICAL FIELD

The present disclosure relates to, but is not limited to, the field of data security technology.

### BACKGROUND

In recent years, the rapid development of mobile internet continuously spawns new business forms and models and promotes the thriving of the Application (App) industry. However, problems such as Apps excessively collecting and misusing personal information are becoming increasingly prominent, seriously infringing upon users' legitimate rights and interests. In general, when downloading and installing an App, the users encounter a "prompt", that is, the users are supposed to read a "user service agreement" and a "privacy policy" and then choose whether to agree to download and install the App, and the App and the services provided by the App are available merely after the users click "Agree" to indicate that the users have read and agreed to all terms. Most users often ignore the "prompt" and directly click "Agree" for saving time to quickly install and use the App. Although some users do read the "user service agreement" and the "privacy policy" firstly, it is hard for those users to notice some key information when browsing the contents of tens of thousands of words in a few seconds, so that the risk of leakage of privacy data exists. On this basis, although most terminals have managed the behaviors of Apps in collecting privacy data, the scope of protection is still limited, privacy data is still frequently leaked, and users' legitimate rights and interests of the users are seriously harmed.

### SUMMARY

The present disclosure provides an application behavior processing method, an electronic device, and a computer storage medium.

In a first aspect, an embodiment of the present disclosure provides an application behavior processing method, including: based on privacy policy information of an application, determining at least one privacy data calling behavior related to the privacy policy information; based on received permission settings information, determining permissions of the application for each privacy data calling behavior related to the privacy policy information; in a case where it is monitored that the application has a privacy data calling behavior, determining whether the application has a permission to execute the monitored privacy data calling behavior; and in a case where the application does not have the permission to execute the monitored privacy data calling behavior, intercepting the monitored privacy data calling behavior.

In a second aspect, an embodiment of the present disclosure provides an electronic device, including: one or more processors; and a storage device having one or more programs stored thereon; and when executed by the one or more processors, the one or more programs cause the one or more processors to implement the application behavior processing method described herein.

In a third aspect, an embodiment of the present disclosure provides a computer storage medium having stored thereon a computer program which, when executed by a processor, implements the application behavior processing method described herein.

### BRIEF DESCRIPTION OF DRAWINGS

FIG. 1 is a first flowchart illustrating an application behavior processing method according to an embodiment of the present disclosure;
FIG. 2 is a second flowchart illustrating an application behavior processing method according to an embodiment of the present disclosure;
FIG. 3 is a schematic diagram illustrating an implementation of operation S130;
FIG. 4 is a schematic diagram illustrating a display effect of a permission management menu in an alternative implementation;
FIG. 5 is a schematic diagram illustrating an implementation of operation S150;
FIG. 6 shows a subordinate permission management menu generated for subordinate privacy data calling behaviors corresponding to a superordinate privacy data calling behavior "sharing contact";
FIG. 7 is a schematic diagram illustrating an implementation of operation S131; and
FIG. 8 is a block diagram of a terminal device according to an embodiment of the present disclosure.

### DETAIL DESCRIPTION OF EMBODIMENTS

Exemplary embodiments will be described more fully below with reference to the drawings, but the exemplary embodiments may be embodied in different forms and should not be interpreted as being limited to the embodiments described herein. Rather, the embodiments are provided to make the present disclosure thorough and complete, and are intended to enable those of ordinary skill in the art to fully understand the scope of the present disclosure.

The term "and/or" used herein includes any and all combinations of one or more associated listed items.

The terms used herein are merely used to describe specific embodiments, and are not intended to limit the present disclosure. As used herein, "a" and "the" which indicate a singular form are intended to include a plural form, unless expressly stated in the context. It should be further understood that the terms "include" and/or "be made of" used herein indicate the presence of the described features, integers, operations, elements and/or components, but do not exclude the presence or addition of one or more other features, integers, operations, elements, components and/or combinations thereof.

The embodiments described herein can be described with reference to plans and/or cross-sectional views with the aid of idealized schematic diagrams of the present disclosure. Accordingly, the exemplary drawings may be modified according to manufacturing techniques and/or tolerances. Therefore, the embodiments are not limited to those illustrated by the drawings, but include modifications to configuration formed based on a manufacturing process. Thus, regions shown in the drawings are illustrative, and shapes of the regions shown in the drawings illustrate specific shapes of regions of elements, but are not intended to make limitations.

Unless otherwise defined, all terms (including technical and scientific terms) used herein have the same meaning as commonly understood by those of ordinary skill in the art. It should be further understood that terms, such as those defined in commonly used dictionaries, should be interpreted as having a meaning that is consistent with a meaning in the related technology and the background of the present disclosure, and should not be interpreted in an idealized or overly formal sense unless expressly so defined herein.

The Ministry of Public Security of the People's Republic of China and three other central government departments jointly issued the document "Methods for Determining Illegal and Irregular Collection and Use of Personal Information by Apps" on November 28, 2019, and the document explicitly requires that Apps provide a privacy policy and specify in the privacy policy how personal information (i.e., privacy data) of users is collected and used. However, the users usually click "Agree" directly without carefully reading the privacy policy provided by the Apps. On this basis, most terminals have managed the behaviors of Apps in collecting privacy data, but the effect is minimal. In view of this, the embodiments of the present disclosure propose that since the privacy data is still frequently leaked even though most terminals have managed the behaviors of the Apps in collecting the privacy data, it is indicated that the privacy data is not acquired and misused merely during the privacy data collection by the Apps, so that in addition to the behaviors of the Apps in collecting the privacy data, infringement behavior features may be extracted based on historical infringement cases in a case database to determine other behaviors that may violate user privacy, and then all privacy data calling behaviors of the Apps are managed accordingly to identify and intercept privacy-violating behaviors, so as to effectively prevent the privacy data from being acquired and misused, and improve security of user privacy.

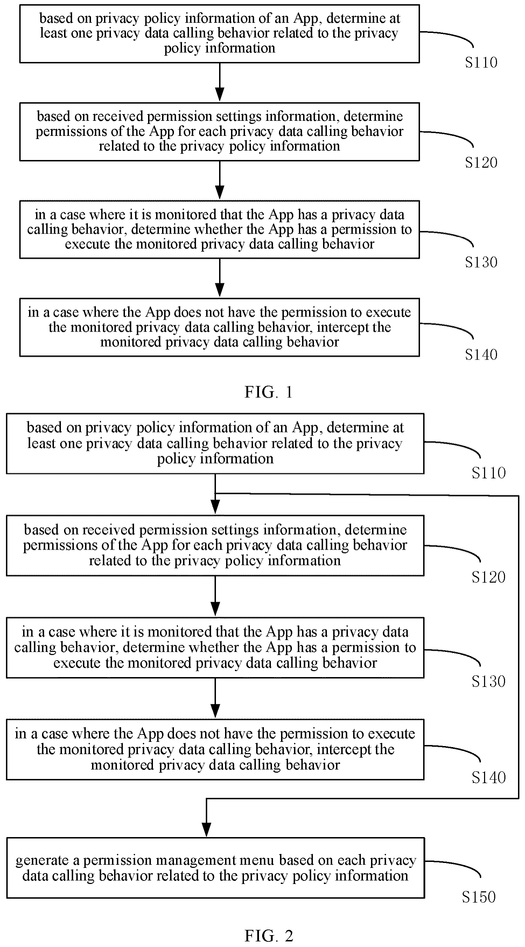

Accordingly, as shown in FIG. 1, an embodiment of the present disclosure provides an application behavior processing method, which may include the following operations S110 to S140.

At operation S110, based on privacy policy information of an App, at least one privacy data calling behavior related to the privacy policy information is determined.

At operation S120, based on received permission settings information, permissions of the App for each privacy data calling behavior related to the privacy policy information are determined.

At operation S130, in a case where it is monitored that the App has a privacy data calling behavior, it is determined whether the App has a permission to execute the monitored privacy data calling behavior.

At operation S140, in a case where the App does not have the permission to execute the monitored privacy data calling behavior, the monitored privacy data calling behavior is intercepted.

When the App is installed or used, the privacy policy information thereof is identified through the above processing method, and whether the App needs permissions of privacy data calling behaviors is determined based on an identification result. In a case where the App has the permissions of the privacy data calling behaviors, permissions are configured for each privacy data calling behavior. The permission settings information may be "allow privacy data calling behavior", that is, the App has a permission to call privacy data; and the permission settings information may also be "deny privacy data calling behavior", that is, the App does not have the permission to call the privacy data. The "permission settings information" will be described in detail below, and thus will not be repeated here.

In the embodiments of the present disclosure, the "permission settings information" may be permission settings information input by a user, or may be permission settings information automatically generated based on infringement behaviors summarized from a historical infringement case database by an electronic device performing the processing method.

For example, historical infringement cases in the case database refer to historical cases regarding violation of user privacy, but it should be noted that the cases may include legal cases regarding violation of user privacy, and may also include typical cases regarding violation of user privacy, such as complaints and reports from users; infringement behavior features are configured to describe which types of behaviors are suspected of violating user privacy when the App calls the privacy data; application behavior permission information may be determined by generating the application behavior permission information first and then storing the application behavior permission information. The contents related to the infringement behavior features are first extracted from the privacy policy information provided by the App, a permission management menu, i.e., the application behavior permission information, for managing the privacy data calling behaviors of the App is then generated based on the extracted contents, and after being generated, the application behavior permission information may be stored for users to modify. Based on the application behavior permission information, privacy violation identification may be performed on the privacy data calling behaviors of the App, and once a behavior of the App is identified as an invasion of privacy, the behavior is immediately intercepted.

The application behavior processing method provided in the embodiments of the present disclosure is applicable to a terminal device such as a smart phone, a smart watch/bracelet, or a tablet computer.

As can be seen from operations S110 to S 140, with the application behavior processing method provided in the embodiments of the present disclosure, the at least one privacy data calling behavior related to the privacy policy information of the App is identified first, and then the permission is configured for the at least one privacy data calling behavior. Behaviors of the App are monitored in real time while the App is running. In a case where it is monitored that the App has a privacy data calling behavior, whether the App has the permission of executing the monitored privacy data calling behavior is determined. If the App does not have the permission of the monitored privacy data calling behavior, the behavior is intercepted.

Compared with the method of merely identifying privacy data collection behaviors of the App and managing the privacy data collection behaviors, the application behavior processing method provided in the embodiments of the present disclosure can manage the privacy data calling behaviors of the App more comprehensively, and can identify the privacy-violating behavior from all the privacy data calling behaviors of the App and intercept the privacy-violating behavior, thereby effectively alleviating the situation that the privacy data is acquired and misused, and improving security of user privacy and terminal user experience.

Illustratively, five stages, i.e., collection, storage, sharing, transfer, and destruction, may be obtained based on a life cycle of user privacy data, and the App is suspected of violating user privacy when collecting, storing, sharing, transferring, and destroying the privacy data. Therefore, illustratively, the infringement behavior features may include: a collection behavior, a storage behavior, a sharing behavior, a transfer behavior, and a destruction behavior. Further, application behavior permissions related to the infringement behavior features and involved the privacy policy information provided by the App may be extracted. Correspondingly, in some embodiments, the application behavior permission information may include collection permission information, storage permission information, sharing permission information, transfer permission information, and destruction permission information.

It should be noted that the application behavior permission information including the collection permission information, the storage permission information, the sharing permission information, the transfer permission information, and the destruction permission information is just for illustration, and the embodiments of the present disclosure are not limited thereto. For example, when it is found based on the historical infringement cases in the case database that the infringement behavior features further include an addition behavior, a replacement behavior, and a modification behavior, the application behavior permission information may further include addition permission information, replacement permission information, and modification permission information.

In the embodiments of the present disclosure, the privacy data includes, but is not limited to: mobile phone numbers, contact lists, text messages, call records, photo albums, emails, calendar entries, browsing records, consumption records, social media accounts, lists of installed applications, location information, clipboard, personal biometric information, International Mobile Equipment Identity ( IMEI ), International Mobile Subscriber Identity (IMSI), Media Access Control (MAC) address, camera data, microphone data, and sensor data.

In the embodiments of the present disclosure, the terminal device may continuously monitor whether the App has a privacy data calling behavior; and once it is monitored that the App has a privacy data calling behavior, it may be first determined whether the private policy information provided by the App is agreed to by a user, and it may be further determined whether the monitored privacy data calling behavior is a privacy-violating behavior based on the previously determined application behavior permission information in a case where it is determined that the private policy information is in a state of being agreed to by the user.

As described above, the "permission settings information" may be input by the user. In order to make it easy for the user to make a decision on "whether to allow a privacy data calling behavior of the App", optionally, as shown in FIG. 2, after determining, based on the privacy policy information of the App, the at least one privacy data calling behavior related to the privacy policy information, the behavior processing method further includes:
operation S150, generating a permission management menu based on each privacy data calling behavior related to the privacy policy information.

In the present disclosure, the permission management menu may be presented in the form of a list, so as to make it easy for the user to know the privacy data calling behaviors related to the App.

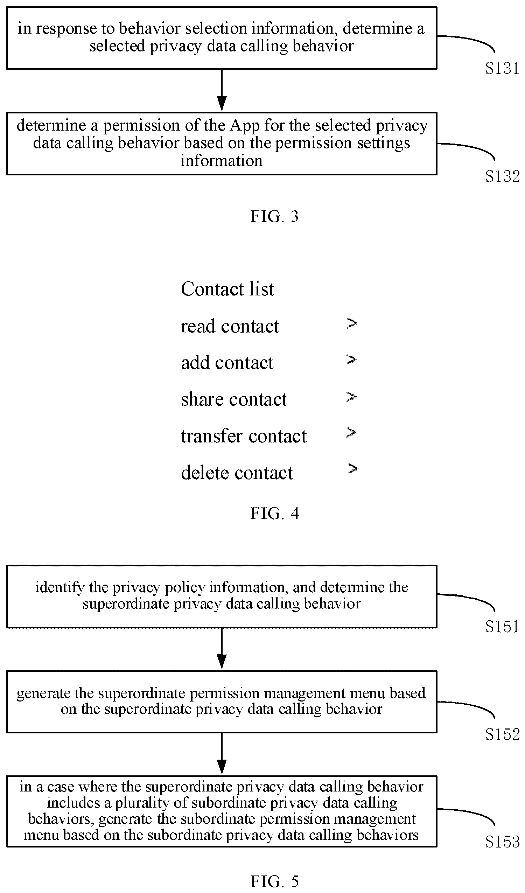

Accordingly, as shown in FIG. 3, in a case where it is monitored that the App has the privacy data calling behavior, determining whether the App has the permission to execute the monitored privacy data calling behavior (operation S130) includes operations S131 and S132.

At operation S131, in response to behavior selection information, a selected privacy data calling behavior is determined.

At operation S132, a permission of the App for the selected privacy data calling behavior is determined based on the permission settings information.

It should be noted that the "behavior selection information" may be input by the user with an input device, or may be determined by the electronic device based on historical infringement information.

FIG. 4 is a schematic diagram illustrating a display effect of the permission management menu in an alternative implementation.

In the implementation illustrated by FIG. 4, the privacy data calling behavior includes each privacy data calling behavior towards a contact list, and exemplarily, the privacy data calling behavior includes reading contact, adding contact, sharing contact, transferring contact, and deleting contact.

In some cases, a certain privacy data calling behavior may include several sub-behaviors. A solution to those cases is described below.

The privacy data calling behavior includes at least one superordinate privacy data calling behavior, at least one of the at least one superordinate privacy data calling behavior includes a plurality of subordinate privacy data calling behaviors (i.e., the above sub-behaviors). Accordingly, the permission management menu includes a superordinate permission management menu and a subordinate permission management menu.

As shown in FIG. 5, generating the permission management menu based on each privacy data calling behavior related to the privacy policy information includes operations S151 to S153.

At operation S151, the privacy policy information is identified, and the superordinate privacy data calling behavior is determined.

At operation S152, the superordinate permission management menu is generated based on the superordinate privacy data calling behavior.

At operation S153, in a case where the superordinate privacy data calling behavior includes a plurality of subordinate privacy data calling behaviors, the subordinate permission management menu is generated based on the subordinate privacy data calling behaviors.

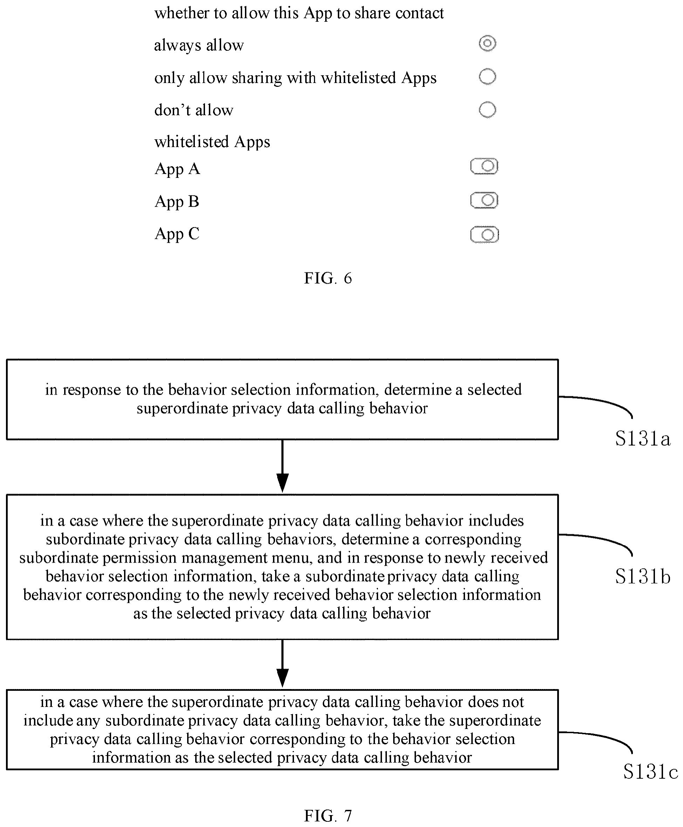

It should be noted that the privacy policy of the App may be determined by parsing the App. All privacy data calling behaviors directly identified from the private policy information are regarded as "superordinate privacy data calling behaviors", and not every "superordinate privacy data calling behavior" includes "subordinate privacy data calling behaviors". For example, the superordinate privacy data calling behavior may be any behavior towards the "contact list" shown in FIG. 4. The superordinate privacy data calling behavior "sharing contact" may include each "subordinate privacy data calling behavior" shown in FIG. 6.

FIG. 6 shows a subordinate permission management menu generated for the subordinate privacy data calling behaviors corresponding to the superordinate privacy data calling behavior "sharing contact".

For the superordinate privacy data calling behavior "sharing contact", a management option "whether to allow this App to share contact" may be set to one of "always allow", "only allow sharing with whitelisted Apps", and "don't allow", and any of "App A", "App B", and "App C" may also be set as the whitelisted Apps.

Accordingly, determining the selected privacy data calling behavior in response to the behavior selection information (i.e., operation S131) includes operations S131a to S131c.

At operation S131a, in response to the behavior selection information, a selected superordinate privacy data calling behavior is determined.

At operation S131b, in a case where the superordinate privacy data calling behavior includes subordinate privacy data calling behaviors, a corresponding subordinate permission management menu is determined, and in response to newly received behavior selection information, a subordinate privacy data calling behavior corresponding to the newly received behavior selection information is taken as the selected privacy data calling behavior.

At operation S131c, in a case where the superordinate privacy data calling behavior does not include any subordinate privacy data calling behavior, the superordinate privacy data calling behavior corresponding to the behavior selection information is taken as the selected privacy data calling behavior.

In the embodiments of the present disclosure, the privacy policy information provided by the App includes usage statement information of the App for the privacy data, and the usage statement information may state how to collect, process, share, protect, store, and transfer the privacy data. For example, the following Table 1 is an example of a catalogue of the usage statement information according to an embodiment of the present disclosure. As can be seen, the usage statement information provides a detailed description of how to call the privacy data.

**Table 1**

| |
|---|
| Main contents of this Privacy Policy: |
| I. Data protection principles |
| II. Occasions, types, and purposes of our collection of your personal information |
| III. How we entrust processing, sharing, transfer and disclosure of your personal information |
| IV. Basis of our processing of personal information |
| V. How we protect your personal information |
| VI. How we store your personal information |
| VII. How we transfer your personal information globally |
| VIII. Protection of children's personal information |
| IX. Your rights to protection of personal information |
| X. Updates to the Privacy Policy |
| XI. How to contact us |
| If you have any question or concern about using your personal information or wish to report or complain to us about any invasion to this Privacy Policy, please contact us through the contact information provided at the bottom of this Privacy Policy. |

The following Table 2 illustrates an example of a list of device permissions required to be obtained in privacy policy information provided by an airline App according to an embodiment of the present disclosure. As can be seen, the usage statement information provides a detailed description of which device permissions are to be obtained.

**Table 2**

| Permissions | Descriptions |
|---|---|
| Camera/Album | Used to facilitate functions such as QR code scanning, boarding pass recognition, and real-name authentication via face recognition. If you deny this permission, it will only prevent you from using the corresponding functions, but will not affect your normal use of other functions. |
| Storage | Used for functions such as image storage, screenshot sharing, and saving pictures to the album. If you deny this permission, it will only prevent you from using the corresponding functions, but will not affect your normal use of other functions. |
| Location | Used to help you quickly locate and query city information. If you deny this permission, it will only prevent you from using the corresponding functions, but will not affect your normal use of other functions. |
| Contact List | Used to access the contact list for retrieving contact information, enabling quick addition of contact details for ticket booking and other functions. If you deny this permission, it will only prevent you from using the corresponding functions, but will not affect your normal use of other functions. |
| Network Services | This App requires network services when first launched. If you deny this permission, it will only prevent you from using the corresponding functions, but will not affect your normal use of other functions. |
| Face ID | Used for quick login verification via Face ID on iOS devices. If you deny this permission, it will only prevent you from using the corresponding functions, but will not affect your normal use of other functions. |
| Local Network | Used on iOS devices to obtain local network information for identifying abnormal device/account status, and is currently used in Dingxiang's risk control strategies. If you deny this permission, it will only prevent you from using the corresponding functions, but will not affect your normal use of other functions. |

The following Table 3 illustrates an example of privacy policy information provided by an airline App requiring sharing of personal information according to an embodiment of the present disclosure. As can be seen, it is described in detail in the usage statement information that personal information may be shared with the provider.

**Table 3**

| Name | Business Purpose | Personal Information Collected | Third-Party Links |
|---|---|---|---|
| App A (Beijing A technology Co., Ltd.) | Risk control | MAC address, IMEI, location information, hardware and software information of device environment | ... |
| App B (Beijing B network Co., Ltd.) | Performance monitoring, user profiling | MAC address, IMEI, location information, network status, hardware and software information of the device environment | ... |
| App C (Beijing C technology Co., Ltd.) | Performance monitoring, user profiling | MAC address, IMEI, location information, SIM card IMSI, hardware and software information of the device environment | ... |

Further, in some embodiments, the application behavior permission information may be in one-to-one correspondence with types of the privacy data. For example, based on the infringement behavior features and the privacy policy information provided by the App, a terminal may generate application behavior permission information corresponding to mobile phone numbers, application behavior permission information corresponding to a contact list, application behavior permission information corresponding to text messages, and application behavior permission information corresponding to call records.

In order to alert the user to "infringement" behaviors of the App, optionally, the behavior processing method further includes: recording a privacy data calling behavior prohibited by the permission settings information.

That is, if the user prohibits a certain privacy data calling behavior autonomously or the electronic device prohibits a certain privacy data calling behavior based on a historical infringement event, the privacy data calling behavior is recorded, so as to facilitate management of each App

In order to alert the user to the interception of the privacy data calling behavior, after intercepting the monitored privacy data calling behavior, the behavior processing method further includes: generating a prompt message based on the intercepted privacy data calling behavior.

A type and contents of the prompt message are not particularly limited in the present disclosure. For example, the prompt message may be at least one of a voice message, a text message, or an image message.

After being generated, the prompt message may be displayed in a prominent manner. For example, the prompt message is displayed through a pop-up window, or the prompt message is sent out through a pop-up window and voice, or the prompt message may also be sent out through voice.

The automatically generated permission settings information or the permission settings information input by the user may be inaccurate, resulting in some problems in subsequence use of the App. In this case, the permissions may be modified. That is, the behavior processing method may further include: in response to an application permission modification instruction, modifying a permission of a privacy data calling behavior corresponding to the application permission modification instruction.

As described above, the privacy data calling behavior includes at least one of the following behaviors: collecting user privacy data, storing user privacy data, sharing user privacy data, transferring user privacy data, and destroying user privacy data.

Correspondingly, the permission settings information corresponding to storing user privacy data is selected from at least one of the following information: the permission settings information indicating not allowing storing the user privacy data in a plain text, the permission settings information indicating not allowing storage in a public data area, the permission settings information indicating only allowing storage while using the App, the permission settings information indicating only allowing storage this time, the permission settings information indicating always allowing storage, or the permission settings information indicating not allowing storage.

Correspondingly, the permission settings information corresponding to transferring user privacy data is selected from at least one of the following information: the permission settings information indicating not allowing plaintext transfer, the permission settings information indicating only allowing transfer while using the App, the permission settings information indicating only allowing transfer this time, the permission settings information indicating always allowing transfer, or the permission settings information indicating not allowing transfer.

Correspondingly, the permission settings information corresponding to destroying user privacy data is selected from at least one of the following information: the permission settings information indicating only allowing destruction while using the App, the permission settings information indicating only allowing destruction this time, the permission settings information indicating always allowing destruction, and the permission settings information indicating not allowing destruction.

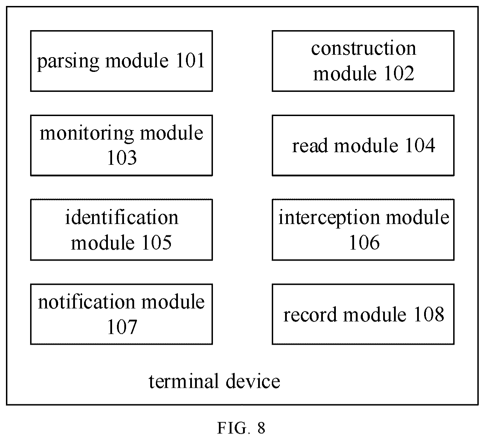

As shown in FIG. 8 which is a block diagram of a terminal device according to an embodiment of the present disclosure, the terminal device may include: a parsing module 101, a construction module 102, a monitoring module 103, a read module 104, an identification module 105, an interception module 106, a notification module 107, and a record module 108. A process of the application behavior processing method provided in the embodiments of the present disclosure may include the following operations a to h.

At operation a, the notification module 107 notifies the parsing module 101 to parse the privacy policy information provided by the App to obtain the usage statement information.

At operation b, the notification module 107 notifies the construction module 102 to construct the application behavior permission information based on the pre-extracted infringement behavior features and the usage statement information.

The infringement behavior features are extracted based on the historical infringement cases in the case database in advance. The case database may be provided on a cloud server, or may be synchronized to a local storage space from the cloud server.

At operation c, the notification module 107 notifies the monitoring module 103 to monitor whether the App calls the privacy data.

If a privacy data calling behavior of the App is monitored, operation d is performed; and if no privacy data calling behavior of the App is monitored, operation c is performed again.

At operation d, the notification module 107 notifies the read module 104 to read a user acknowledge state regarding the privacy policy information.

That is, a state indicating whether the privacy policy information is agreed to by the user is read, operation e is performed if the privacy policy information is agreed to by the user, and operation f is performed if the privacy policy information is not agreed to by the user.

At operation e, the notification module 107 notifies the identification module 105 to identify whether the monitored privacy data calling behavior violates privacy.

Exemplarily, whether the monitored privacy data calling behavior violates privacy is identified based on the application behavior permission information, operation f is performed if the monitored privacy data calling behavior violates privacy, and operation c is performed if the monitored privacy data calling behavior does not violate privacy.

At operation f, the notification module 107 notifies the interception module 106 to intercept the privacy data calling behavior of the App.

At operation g, the notification module 107 notifies the user on a display interface of the terminal device that the App has the privacy-violating behavior.

At operation h, the notification module 107 notifies the record module 108 to record the privacy-violating behavior.

In addition, an embodiment of the present disclosure further provides an electronic device, including: one or more processors; and a storage device having one or more programs stored thereon; and when executed by the one or more processors, the one or more programs cause the one or more processors to implement the application behavior processing method described above.

In addition, an embodiment of the present disclosure further provides a computer storage medium having stored thereon a computer program which, when executed by a processor, implements the application behavior processing method described above.

It should be understood by those of ordinary skill in the art that the functional modules/units in all or some of the operations and the devices in the method disclosed above may be implemented as software, firmware, hardware, or suitable combinations thereof. If implemented as hardware, the division between the functional modules/units stated above does not necessarily correspond to the division of physical components; for example, one physical component may have a plurality of functions, or one function or operation may be performed through cooperation of several physical components. Some or all of the physical components may be implemented as software executed by a processor, such as a Central Processing Unit (CPU), a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/nonvolatile and removable/non-removable media used in any method or technology for storing information (such as computer-readable instructions, data structures, program modules or other data). The computer storage medium includes, but is not limited to, a Random Access Memory (RAM), a Read-Only Memory (ROM), an Electrically Erasable Programmable Read-Only Memory (EEPROM), a flash memory or other memory techniques, a Compact Disc Read Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer. In addition, it is well known by those of ordinary skill in the art that the communication media generally include computer-readable instructions, data structures, program modules, or other data in modulated data signals such as carriers or other transmission mechanisms, and may include any information delivery medium.

The present disclosure discloses the exemplary embodiments using specific terms, but the terms are merely used and should be merely interpreted as having general illustrative meanings, rather than for the purpose of limitation. Unless expressly stated, it is apparent to those of ordinary skill in the art that the features, characteristics and/or elements described in connection with a particular embodiment can be used alone or in combination with the features, characteristics and/or elements described in connection with other embodiments. Therefore, it should be understood by those of ordinary skill in the art that various changes in forms and details can be made without departing from the scope of the present disclosure of the appended claims.

## Claims

1. An application behavior processing method, comprising:
based on privacy policy information of an application, determining at least one privacy data calling behavior related to the privacy policy information;
based on received permission settings information, determining permissions of the application for each privacy data calling behavior related to the privacy policy information;
in a case where it is monitored that the application has a privacy data calling behavior, determining whether the application has a permission to execute the monitored privacy data calling behavior; and
in a case where the application does not have the permission to execute the monitored privacy data calling behavior, intercepting the monitored privacy data calling behavior.

2. The behavior processing method of claim 1, wherein after determining the at least one privacy data calling behavior related to the privacy policy information based on the privacy policy information of the application, the behavior processing method further comprises:
generating a permission management menu based on each privacy data calling behavior related to the privacy policy information; and
in a case where it is monitored that the application has the privacy data calling behavior, determining whether the application has the permission to execute the monitored privacy data calling behavior comprises:
in response to behavior selection information, determining a selected privacy data calling behavior; and
determining a permission of the application for the selected privacy data calling behavior based on the permission settings information.

3. The behavior processing method of claim 2, wherein the privacy data calling behavior comprises at least one superordinate privacy data calling behavior, at least one of the at least one superordinate privacy data calling behavior comprises a plurality of subordinate privacy data calling behaviors; and the permission management menu comprises a superordinate permission management menu and a subordinate permission management menu;
generating the permission management menu based on each privacy data calling behavior related to the privacy policy information comprises:
identifying the privacy policy information, and determining a superordinate privacy data calling behavior;
generating the superordinate permission management menu based on the superordinate privacy data calling behavior; and
in a case where the superordinate privacy data calling behavior comprises a plurality of subordinate privacy data calling behaviors, generating the subordinate permission management menu based on the plurality of subordinate privacy data calling behaviors; and
in response to the behavior selection information, determining the selected privacy data calling behavior comprises:
in response to the behavior selection information, determining a selected superordinate privacy data calling behavior;
in a case where the superordinate privacy data calling behavior comprises subordinate privacy data calling behaviors, determining a corresponding subordinate permission management menu, and in response to newly received behavior selection information, taking a subordinate privacy data calling behavior corresponding to the newly received behavior selection information as the selected privacy data calling behavior; and
in a case where the superordinate privacy data calling behavior does not comprise any subordinate privacy data calling behavior, taking the superordinate privacy data calling behavior corresponding to the behavior selection information as the selected privacy data calling behavior.

4. The behavior processing method of any one of claims 1 to 3, further comprising:
recording a privacy data calling behavior prohibited by the permission settings information.

5. The behavior processing method of any one of claims 1 to 3, wherein after intercepting the monitored privacy data calling behavior, the behavior processing method further comprises:
generating a prompt message based on the intercepted privacy data calling behavior.

6. The behavior processing method of any one of claims 1 to 3, further comprising:
in response to an application permission modification instruction, modifying a permission of a privacy data calling behavior corresponding to the application permission modification instruction.

7. The behavior processing method of any one of claims 1 to 3, wherein the privacy data calling behavior comprises at least one of:
collecting user privacy data, storing user privacy data, sharing user privacy data, transferring user privacy data, and destroying user privacy data.

8. The behavior processing method of claim 7, wherein the permission settings information corresponding to storing user privacy data is selected from at least one of: the permission settings information indicating not allowing storing the user privacy data in a plain text, the permission settings information indicating not allowing storage in a public data area, the permission settings information indicating only allowing storage while using the application, the permission settings information indicating only allowing storage this time, the permission settings information indicating always allowing storage, or the permission settings information indicating not allowing storage;
the permission settings information corresponding to transferring user privacy data is selected from at least one of: the permission settings information indicating not allowing plaintext transfer, the permission settings information indicating only allowing transfer while using the application, the permission settings information indicating only allowing transfer this time, the permission settings information indicating always allowing transfer, or the permission settings information indicating not allowing transfer; and
the permission settings information corresponding to destroying user privacy data is selected from at least one of: the permission settings information indicating only allowing destruction while using the application, the permission settings information indicating only allowing destruction this time, the permission settings information indicating always allowing destruction, or the permission settings information indicating not allowing destruction.

9. An electronic device, comprising:
one or more processors; and
a storage device having one or more programs stored thereon;
wherein the one or more programs, when executed by the one or more processors, cause the one or more processors to implement the application behavior processing method of any one of claims 1 to 8.

10. A computer storage medium having stored thereon a computer program which, when executed by a processor, implements the application behavior processing method of any one of claims 1 to 8.
